# EUROPEAN PATENT APPLICATION

(11) **EP 3 754 302 A1**
(43) Date of publication of application: **23.12.2020**
(21) Application number: 19905137.6
(22) Date of filing: 30.05.2019
(51) Int. Cl.: G01C 21/00, G01S 19/47

(54) **FLIGHT CONTROL AND NAVIGATION INTEGRATED MACHINE**

(30) Priority: 29.12.2018 CN 201811653652; 29.12.2018 CN 201822273877 U
(71) Applicant: GFA Aviation Technology Beijing Co., Ltd., Beijing 102402 (CN)
(72) Inventor: CHEN, Tingfei, Putian, Fujian 351200 (CN); LI, Zhaohui, Xianning, Hubei 437300 (CN); SUN, Lijun, Puyang, Henan 457001 (CN); WANG, Lei, Jiaozuo, Henan 454350 (CN)
(74) Representative: Vesterinen, Jussi Tapio
(86) International application number: PCT/CN2019/089254
(87) International publication number: WO 2020/133909

(57) **Abstract**

The present invention provides an integrated flight control and navigation machine, which relates to the field of aerospace technology and solves the technical problem of large positioning error of unmanned aerial vehicles in the prior art. A navigation board is connected to an MEMS inertial measurement unit. The MEMS inertial measurement unit measures and acquires the inertial navigation data and sends the inertial navigation data to the navigation board; a RTK navigation system comprises an RTK base station and an onboard RTK device, the navigation board receives GPS/BD/GLONASS satellite carrier phase data sent by the onboard RTK device, and the onboard RTK device receives the GPS/BD/GLONASS satellite carrier phase data sent by the RTK base station, the high-precision positioning data of the unmanned aerial vehicle is solved in real time, and centimeter-level positioning precision is achieved. The utility model can achieve precise positioning and flight navigation control of the unmanned aerial vehicle.

## Description

The present application claims the priority of the Chinese patent application submitted to the State Intellectual Property Office of China on December 29, 2018 and entitled "Integrated Flight Control and Navigation Machine" with the application number 201811653652.X, the entire content of which is incorporated herein by reference.

The present application claims the priority of the Chinese patent application submitted to the State Intellectual Property Office of China on December 29, 2018 and entitled "Integrated Flight Control and Navigation Machine" with the application number 201822273877.4, the entire content of which is incorporated herein by reference.

### TECHNICAL FIELD

The present invention relates to the field of aerospace technology, in particular to an integrated flight control and navigation machine.

### BACKGROUND

Unmanned aerial vehicles have the advantages of no need for air pilots, strong maneuverability, relatively low cost, easy operation, etc. Unmanned aerial vehicles have a wide application market and a good application prospect in regional reconnaissance and surveillance, target locking tracking and communication relay, etc. in the military field, anti-terrorism reconnaissance and surveillance, security and traffic monitoring, etc. in the police field, oil pipeline patrol, power patrol, agriculture, forestry, plant protection, fisheries, and other services in the civil field, so that the unmanned aerial vehicles develop very rapidly.

In the prior art, the flight control system of the unmanned aerial vehicle mostly consists of three parts: a ground remote control device, an onboard control device, and an onboard driving device. The ground operator needs to observe the flight status of the unmanned aerial vehicle in real time and control the remote control device according to the flight status. The remote control device interacts with the received control information and the onboard control device. The onboard control device analyzes and calculates the received instruction information, then controls the onboard drive system according to the processed instruction information, and finally, controls the unmanned aerial vehicle through the onboard drive system.

The original utility model patent (patent number CN201520362798.4) has at least the following technical problems:

the GPS/BD/GLONASS receiver contained in the integrated flight control and navigation machine has a large positioning error for the unmanned aerial vehicle, which affects the flight control of the unmanned aerial vehicle.

The present application improves the above technical problems.

### SUMMARY

The object of the embodiments of the present invention is to provide an integrated flight control and navigation machine to solve the technical problem in the prior art that the integrated flight control and navigation machine containing the GPS/BD/GLONASS receiver has a large positioning error.

To achieve the above object, the present invention provides the following technical solutions:

An integrated flight control and navigation machine provided by the present invention, comprising a navigation board, an MEMS inertial measurement unit, a GPS/BD/GLONASS receiver, and an RTK navigation system, wherein: the navigation board is connected to the MEMS inertial measurement unit, and the MEMS inertial measurement unit measures and acquires inertial navigation data and sends the inertial navigation data to the navigation board;

the navigation board is connected to the GPS/BD/GLONASS receiver, the RTK navigation system comprises an RTK base station and an onboard RTK device, the navigation board receives positioning data sent by the onboard RTK device, the onboard RTK device is provided on the GPS/BD/GLONASS receiver, the RTK base station receives GPS/BD/GLONASS satellite signals and solves the GPS/BD/GLONASS satellite signals to obtain GPS/BD/GLONASS carrier phase data, and the GPS/BD/GLONASS satellite data is sent to the onboard RTK device through a remote control link;

the onboard RTK device receives the GPS/BD/GLONASS satellite carrier phase data sent by the RTK base station, and sends the GPS/BD/GLONASS satellite carrier phase data to the navigation board for solution processing to obtain the position and speed data of the unmanned aerial vehicle and achieve centimeter-level positioning precision.

Preferably, the integrated flight control and navigation machine further comprises an atmospheric pressure sensor, wherein the atmospheric pressure sensor is connected to the navigation board, the atmospheric pressure sensor receives full and static pressure and converts it into an electrical signal, and the electrical signal is sent to the navigation board.

Preferably, the navigation board solves the electrical signal, and the electrical signal is converted into vacuum speed, indicated airspeed and atmosphere height.

Preferably, the integrated flight control and navigation machine further comprises a main board, wherein the main board is connected to the navigation board, and the main board receives the data of the navigation board and solves the amount of steering engine output through a control law in combination with atmospheric parameter.

Preferably, the integrated flight control and navigation machine further comprises an electrical interface, wherein the electrical interface is connected to the navigation board.

Preferably, the electrical interface comprises a discrete interface, a digital interface, an analog interface, and a communication interface.

Preferably, the MEMS inertial measurement unit measures and acquires inertial navigation data, and the inertial navigation data comprises angular rate data, acceleration data, and geomagnetic data.

Preferably, a CPU is provided in the navigation board, and the CPU performs combined navigation solution on the inertial navigation data and the GPS/BD/GLONASS satellite data.

Preferably, the integrated flight control and navigation machine further comprises a housing and a motherboard, wherein the main board, the navigation board, the MEMS inertial measurement unit and the GPS/BD/GLONASS receiver are all installed inside the housing, the GPS/BD/GLONASS receiver is installed on one side of the navigation board, the GPS/BD/GLONASS receiver is installed on the other side of the navigation board, and the main board is electrically connected to the navigation board.

Preferably, a circular electrical connector is further installed on the outer surface of the housing, one end of the circular electrical connector is electrically connected to the motherboard, and the other end thereof is electrically connected to an external device.

Compared with the prior art, an integrated flight control and navigation machine provided by an embodiment of the present invention has the following technical effects.

The integrated flight control and navigation machine comprises a navigation board, an MEMS inertial measurement unit, a GPS/BD/GLONASS receiver, and an RTK navigation system, and the RTK navigation system comprises an RTK base station and an onboard RTK device. The RTK base station receives GPS/BD/GLONASS satellite signals and solves the GPS/BD/GLONASS satellite signals to obtain GPS/BD/GLONASS satellite data, and the GPS/BD/GLONASS satellite data is sent to the onboard RTK device; the onboard RTK device performs solution processing according to the GPS /BD/GLONASS satellite data and the GPS/BD/GLONASS satellite carrier phase data to obtain the position and speed data of the unmanned aerial vehicle and achieve the purpose of precise positioning of the unmanned aerial vehicle.

### BRIEF DESCRIPTION OF THE DRAWINGS

In order to more clearly explain the embodiments of the present invention or the technical solutions in the prior art, the drawings required in the embodiments or the description of the prior art will be briefly introduced. Obviously, the drawings in the following description are only a part of the embodiments of the present invention. For those skilled in the art, other drawings can be obtained based on these drawings without paying any creative labor.
FIG. 1 is a circuit flow diagram of an integrated flight control and navigation machine according to an embodiment of the present invention;
FIG. 2 is a top view of an integrated flight control and navigation machine according to an embodiment of the present invention.

### In the figures:

101, navigation board; 102, MEMS inertial measurement unit; 103, GPS/BD/GLONASS receiver; 104, main board; 105, atmospheric pressure sensor.

### DESCRIPTION OF THE EMBODIMENTS

To make the objectives, technical solutions, and advantages of the present invention clearer, the technical solutions of the present invention will be described in detail hereinafter. Obviously, the described embodiments are only a part of the embodiments of the present invention, rather than all the embodiments. Based on the embodiments of the present invention, all other embodiments obtained by those skilled in the art without paying any creative labor shall fall within the protection scope of the present invention.

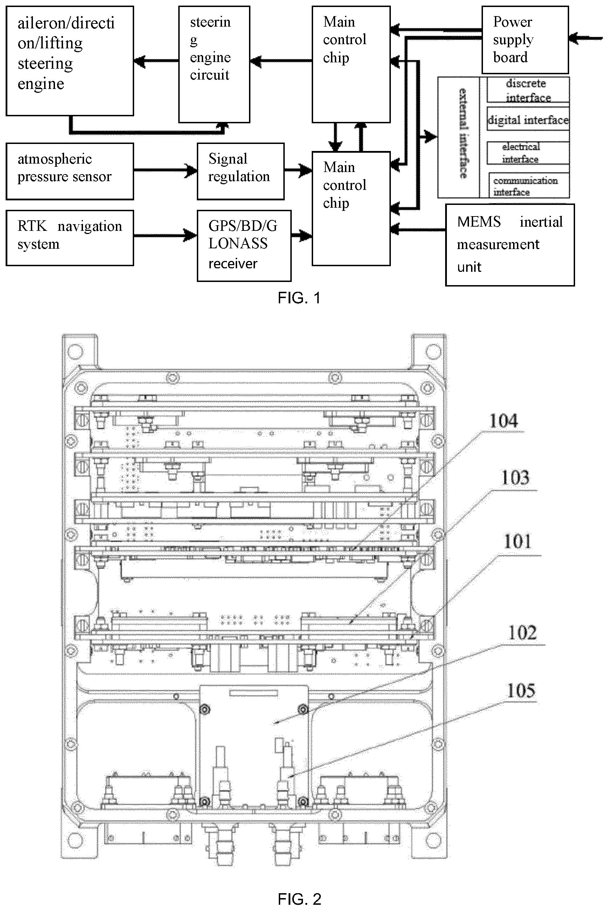

In the description of the present invention, it should be understood that the orientation or positional relationship indicated by the terms "center", "length", "width", "height", "upper", "lower", "front", "back", "left", "right", "vertical", "horizontal", "top", "bottom", "inner", "outer", "side", etc. is based on the orientation or positional relationship shown in FIG.1. It is only for the convenience of describing the present invention and simplifying the description, rather than indicating or implying that the indicated device or element must have a specific orientation or be constructed and operate in a specific orientation, and therefore cannot be construed as limiting the present invention. In the description of the present invention, unless otherwise stated, "a plurality of" means two or more.

As shown in FIG. 1, FIG. 1 is a circuit flow chart of an integrated flight control and navigation machine according to an embodiment of the present invention. The main control chip shown in FIG. 1 comprises a main board 104 and a navigation board 101, which belongs to a flight control module. The navigation board 101 is electrically connected to the main board 104, and the navigation board 101 can transmit the received signal to the main board 104. The main board 104 transmits the signal to the steering engine circuit, so as to control the flight status of the unmanned aerial vehicle, that is to say, an aileron/direction/lifting steering engine. Refer to the utility model patent entitled "Integrated Flight Control and Navigation Machine" with the application number "CN201520362798.4" for the specific structure of the unmanned aerial vehicle.

The present invention is mainly to improve the navigation and control system of the integrated flight control and navigation machine, which comprises a navigation board 101, a MEMS inertial measurement unit 102, a GPS/BD/GLONASS receiver 103, and a RTK navigation system. The navigation board 101 is connected to the MEMS inertial measurement unit 102, and the MEMS inertial measurement unit 102 measures and acquires inertial navigation data and sends the inertial navigation data to the navigation board 101;
the navigation board 101 is connected to the GPS/BD/GLONASS receiver 103, the RTK navigation system comprises an RTK base station and an onboard RTK device, the navigation board 101 receives positioning data sent by the onboard RTK device, the onboard RTK device is provided on the GPS/BD/GLONASS receiver 103, the RTK base station receives GPS/BD/GLONASS satellite signals and solves the GPS/BD/GLONASS satellite signals to obtain GPS/BD/GLONASS carrier phase data, and the GPS/BD/GLONASS carrier phase data is sent to the onboard RTK device through a remote control link;
the onboard RTK device receives the GPS/BD/GLONASS satellite carrier phase data sent by the RTK base station, and sends the GPS/BD/GLONASS satellite carrier phase data to the navigation board 101 for solution processing to obtain the position and speed data of the unmanned aerial vehicle and achieve centimeter-level positioning precision.

The integrated flight control and navigation machine further comprises a power board: which is used to convert 28V DC into the stable DC voltage required by the system; a main board: which is used for data solution; a steering engine circuit board: which is used to control the steering gear; and a mother board: which is used for connection between each board and external lead.

The onboard RTK device is used to perform solution processing on the GPS /BD/GLONASS satellite data and the GPS/BD/GLONASS satellite carrier phase data to obtain the position and speed data of the unmanned aerial vehicle and achieve the purpose of precise positioning of the unmanned aerial vehicle. Based on the structure of the unmanned aerial vehicle, the present invention integrates the traditional inertial navigation system, the atmospheric data computer, and the flight control computer, and has the advantages of high positioning precision, high integration, small size, light weight, and low cost.

The real-time kinematic carrier phase differential (RTK) positioning technology is based on real-time processing of the carrier phase of two base stations, and the carrier phase acquired by the base station is sent to the user station to calculate the difference and solve the coordinate, which can provide the three-dimensional coordinates of the observation point in real time, and achieve centimeter-level high precision.

As a preferred solution of this embodiment, the integrated flight control and navigation machine further comprises an atmospheric pressure sensor 105, wherein the atmospheric pressure sensor 105 is connected to the navigation board 101, the atmospheric pressure sensor 105 receives full and static pressure and converts it into an electrical signal, and the electrical signal is sent to the navigation board 101.

As a preferred solution of this embodiment, the navigation board 101 solves the electrical signal, and the electrical signal is converted into vacuum speed, indicated airspeed and atmosphere height.

As a preferred solution of this embodiment, the integrated flight control and navigation machine further comprises a main board 104, wherein the main board 104 is connected to the navigation board 101, and the main board 104 receives the data of the navigation board 101 and solves the amount of steering engine output through a control law in combination with atmospheric parameter.

As a preferred solution of this embodiment, the integrated flight control and navigation machine further comprises an electrical interface, wherein the electrical interface is connected to the navigation board 101.

As a preferred solution of this embodiment, the electrical interface comprises a discrete interface, a digital interface, an analog interface, and a communication interface.

As a preferred solution of this embodiment, the MEMS inertial measurement unit 102 measures and acquires inertial navigation data, and the inertial navigation data comprises angular rate data, acceleration data, and geomagnetic data.

As a preferred solution of this embodiment, a CPU is provided in the navigation board 101, and the CPU performs combined navigation solution on the inertial navigation data and the GPS/BD/GLONASS satellite data.

In addition, the integrated flight control and navigation machine further comprises a heating element for heating the integrated flight control and navigation machine device. The heating start and stop temperature can be set by the program. The purpose is to prevent the high altitude from resulting in the external temperature lower than the use temperature of components so as to result in malfunction or failure of certain functions.

The integrated flight control and navigation machine further comprises a housing and a motherboard, wherein the main board 104, the navigation board 101, the MEMS inertial measurement unit 102 and the GPS/BD/GLONASS receiver 103 are all installed inside the housing, the GPS/BD/GLONASS receiver 103 is installed on one side of the navigation board 101, the GPS/BD/GLONASS receiver 103 is installed on the other side of the navigation board 101, and the main board 104 is electrically connected to the navigation board 101.

As a preferred solution of this embodiment, a circular electrical connector is further installed on the outer surface of the housing, one end of the circular electrical connector is electrically connected to the motherboard 104, and the other end thereof is electrically connected to an external device.

The working principle is as follows: the MEMS inertial measurement unit 102 measures and acquires the original inertial navigation data of the carrier, comprising angular rate data, acceleration data and geomagnetic data, and transmits the inertial navigation data to the navigation board 101;
the RTK base station receives GPS/BD/GLONASS satellite signals, solves the GPS/BD/GLONASS satellite signals, obtains GPS/BD/GLONASS satellite data, and sends GPS/BD/GLONASS satellite data to the onboard RTK device; the onboard RTK device performs solution processing according to GPS/BD/GLONASS satellite data and GPS/BD/GLONASS satellite carrier phase data to obtain the position and speed data of the unmanned aerial vehicle, and sends the position and speed data of the unmanned aerial vehicle to the navigation board 101;
the atmospheric pressure sensor 105 receives the dynamic and static pressure transmitted from an airspeed tube, converts it into an electrical signal, and transmits the electrical signal to the navigation board 101;
the navigation board 101 performs combined navigation solution on the received inertial navigation data of the MEMS inertial measurement unit 102 and the position and speed data of the GPS/BD/GLONASS receiver 103 to obtain combined navigation data; at the same time, the navigation board 101 solves the received electrical signal of the atmospheric pressure sensor 105 to obtain atmospheric parameters such as vacuum speed, indicated airspeed, and atmospheric altitude; the navigation board 101 transmits the combined navigation data and atmospheric parameters to the main board 104.

The main board 104 uses the received combined navigation data and atmospheric parameters to solve the amount of steering engine output through a control law so as to perform flight control, thereby achieving automatic flight of the entire process of the unmanned aerial vehicle.

The above are only specific embodiments of the present invention, but the protection scope of the present invention is not limited thereto. Any changes or replacements easily conceivable to those skilled in the art within the technical scope disclosed by the present invention should be covered by the protection scope of the present invention. Therefore, the protection scope of the present invention should be subject to the protection scope of the claims.

## Claims

1. An integrated flight control and navigation machine, comprising a navigation board (101), an MEMS inertial measurement unit (102), a GPS/BD/GLONASS receiver (103), and an RTK navigation system, wherein:
the navigation board (101) is connected to the MEMS inertial measurement unit (102), and the MEMS inertial measurement unit (102) measures and acquires inertial navigation data and sends the inertial navigation data to the navigation board (101);
the navigation board (101) is connected to the GPS/BD/GLONASS receiver (103), the RTK navigation system comprises an RTK base station and an onboard RTK device, the navigation board (101) receives positioning data sent by the onboard RTK device, the onboard RTK device is provided on the GPS/BD/GLONASS receiver (103), the RTK base station receives GPS/BD/GLONASS satellite signals and solves the GPS/BD/GLONASS satellite signals to obtain GPS/BD/GLONASS carrier phase data, and the GPS/BD/GLONASS satellite data is sent to the onboard RTK device through a remote control link;
the onboard RTK device receives the GPS/BD/GLONASS satellite carrier phase data sent by the RTK base station, and sends the GPS/BD/GLONASS satellite carrier phase data to the navigation board (101) for solution processing to obtain the position and speed data of the unmanned aerial vehicle and achieve centimeter-level positioning precision.

2. The integrated flight control and navigation machine according to claim 1, further comprising an atmospheric pressure sensor (105), wherein the atmospheric pressure sensor (105) is connected to the navigation board (101), the atmospheric pressure sensor (105) receives full and static pressure and converts it into an electrical signal, and the electrical signal is sent to the navigation board (101).

3. The integrated flight control and navigation machine according to claim 2, wherein the navigation board (101) solves the electrical signal, and the electrical signal is converted into vacuum speed, indicated airspeed and atmosphere height.

4. The integrated flight control and navigation machine according to claim 1, further comprising a main board (104), wherein the main board (104) is connected to the navigation board (101), and the main board (104) receives the data of the navigation board (101) and solves the amount of steering engine output through a control law in combination with atmospheric parameter.

5. The integrated flight control and navigation machine according to claim 4, further comprising an electrical interface, wherein the electrical interface is connected to the navigation board (101).

6. The integrated flight control and navigation machine according to claim 5, wherein the electrical interface comprises a discrete interface, a digital interface, an analog interface, and a communication interface.

7. The integrated flight control and navigation machine according to claim 6, wherein the MEMS inertial measurement unit (102) measures and acquires inertial navigation data, and the inertial navigation data comprises angular rate data, acceleration data, and geomagnetic data.

8. The integrated flight control and navigation machine according to claim 7, wherein a CPU is provided in the navigation board (101), and the CPU performs combined navigation solution on the inertial navigation data and the GPS/BD/GLONASS satellite data.

9. The integrated flight control and navigation machine according to any one of claims 4 to 8, further comprising a housing and a motherboard, wherein the main board (104), the navigation board (101), the MEMS inertial measurement unit (102) and the GPS/BD/GLONASS receiver (103) are all installed inside the housing, the GPS/BD/GLONASS receiver (103) is installed on one side of the navigation board (101), the GPS/BD/GLONASS receiver (103) is installed on the other side of the navigation board (101), and the main board (104) is electrically connected to the navigation board (101).

10. The integrated flight control and navigation machine according to claim 9, wherein a circular electrical connector is further installed on the outer surface of the housing, one end of the circular electrical connector is electrically connected to the motherboard (104), and the other end thereof is electrically connected to an external device.
